# EUROPÄISCHE PATENTANMELDUNG

(11) **EP 2 455 582 A2**
(43) Veröffentlichungstag der Anmeldung: **23.05.2012**
(21) Anmeldenummer: 11185024.4
(22) Anmeldetag: 13.10.2011
(51) Int. Cl.: E21D 21/00, F16B 13/00

(54) **Ankerbaugruppe, insbesondere für den Berg- und Tunnelbau**

(30) Priorität: 11.11.2010 DE 102010043769
(71) Anmelder: HILTI Aktiengesellschaft, 9494 Schaan (LI)
(72) Erfinder: Podesser, Richard, 86807 Buchloe (DE); Schwalbach, Lothar, 86937 Scheuring (DE)

(57) **Zusammenfassung**

Die Erfindung betrifft eine Ankerbaugruppe (10), insbesondere für den Berg- und Tunnelbau, umfassend eine Bohrkrone (32) mit einem Bohrabschnitt (50) und einem Verbindungsabschnitt (52), sowie einen Ankerstab (12) aus Kunststoff, der sich längs einer Ankerachse (X) erstreckt und im Bereich eines axialen Stabendes einen Verbindungsabschnitt (16) zum Befestigen der Bohrkrone (32) aufweist, wobei der Außendurchmesser (d_{32A}) der Bohrkrone (32) größer als der Außendurchmesser (d_{12A}) des Ankerstabs (12) am Verbindungsabschnitt (16) ist, und wobei der Außendurchmesser (d_{32A}) der Bohrkrone (32) höchstens 20 %, insbesondere höchstens 10 %, und/oder höchstens 10 mm größer ist als der Außendurchmesser (d_{12A}) des Ankerstabs (12) am Verbindungsabschnitt (16).

## Beschreibung

Die Erfindung betrifft eine Ankerbaugruppe, insbesondere für den Berg- und Tunnelbau, umfassend eine Bohrkrone mit einem Bohrabschnitt und einem Verbindungsabschnitt, sowie einen Ankerstab aus Kunststoff, der sich längs einer Ankerachse erstreckt und im Bereich eines axialen Stabendes einen Verbindungsabschnitt zum Befestigen der Bohrkrone aufweist wobei der Außendurchmesser der Bohrkrone größer als der Außendurchmesser des Ankerstabs am Verbindungsabschnitt ist.

Im Allgemeinen sind Ankerbaugruppen zur Felssicherung, insbesondere zur Befestigung von Stollenwänden im Bergbau sowie von Tunnelwänden im Verkehrswegebau bereits seit langem bekannt. Üblicherweise kommen metallene Ankerstäbe mit vorgefertigtem Gewinde zum Einsatz. Außer dem Ankerstab umfasst die Ankerbaugruppe dabei wenigstens ein Funktionsteil, beispielsweise eine Spannmutter, welche beim Setzen des Ankers auf den Ankerstab aufgedreht wird.

Um Materialkosten und Gewicht einzusparen, kamen in jüngerer Zeit Ankerbaugruppen mit einem Ankerstab aus Kunststoff auf den Markt, wobei diese Kunststoff-Ankerstäbe zur Verbesserung ihrer mechanischen Eigenschaften häufig faserverstärkt ausgebildet sind. Besonders bekannt sind darunter sogenannte GFK-Anker, das heißt Ankerbaugruppen mit einem Ankerstab aus glasfaserverstärktem Kunststoff.

Die Ankerstäbe aus Kunststoff sind aufgrund ihres hohen E-Moduls kaum dehnbar und weisen lediglich eine geringe Druck- und Scherfestigkeit auf. Infolge der geringen Dehnbarkeit werden die Anker relativ dicht gesetzt, um jegliche Bewegung des Untergrundes zu verhindern und die auftretenden Scherkräfte pro Anker zu verringern. Infolge der geringen Druck- und Scherfestigkeit wird ein beachtlicher Anteil der herkömmlichen GFK-Anker bereits durch die während der Installation auftretenden Druck- und Schubkräfte beschädigt oder zerstört. Die bekannten GFK-Ankerstäbe weisen an einem axialen Ende ein Funktionsteil, beispielsweise eine Spannmutter oder (bei selbstbohrenden Ankerbaugruppen) eine Antriebsmutter auf, mithilfe derer die Ankerbaugruppe installiert wird. Diese Muttern können aus Stahl oder Kunststoff gefertigt sein und werden auf ein am Ankerstab vorgefertigtes Gewinde aufgeschraubt. Diese Schraubverbindungen sind allerdings nicht in der Lage, hohe Drehmomente oder Zugkräfte aufzunehmen.

Das vorgefertigte Gewinde, insbesondere am Ankerstab, kann bereits vor dem Herstellen der Ankerbaugruppe sowie beim Transport oder aber bei der Montage des Kunststoffankers leicht beschädigt werden, woraufhin die Ankerbaugruppe nicht mehr verwendet werden kann. Im Übrigen kann die Gewindeverbindung zwischen Ankerstab und Funktionsteil nur einen kleinen Teil (meist nur etwa 20-30 %) der maximal zulässigen Zugkraft des Ankerstabs aufnehmen.

Ein Vorteil von GFK-Ankern liegt darin, dass sie sehr hohe Zugkräfte aufnehmen können und sich infolgedessen hervorragend zur Rückverankerung von Tunnel- oder Stollenwänden eignen. Im Falle einer nachträglichen Erweiterung eines Tunnel- oder Stollenquerschnitts erweist sich die geringe Druck- und Scherfestigkeit der Kunststoff-Ankerstäbe als vorteilhaft. Die Ankerstäbe zur Felssicherung des ursprünglichen Tunnels oder Stollens stecken dann in dem zu entfernenden Gestein und lassen sich bei der Querschnittserweiterung aufgrund ihrer geringen Scherfestigkeit relativ einfach durch Tunnelbohrmaschinen oder Abraummaschinen zerstören, ohne die Maschinen selbst zu beschädigen.

Aufgabe der Erfindung ist nun die Bereitstellung einer selbstbohrenden Ankerbaugruppe, die sich unter möglichst geringer mechanischer Beanspruchung ihrer Ankerkomponenten setzen lässt und zwischen ihrem Ankerstab aus Kunststoff und dem Funktionsteil eine robuste Verbindung aufweist, welche hohe Zugkräfte und Drehmomente aufnehmen kann.

Erfindungsgemäß wird diese Aufgabe gelöst durch eine Ankerbaugruppe der eingangs genannten Art, bei der ein Außendurchmesser der Bohrkrone höchstens 20 %, insbesondere höchstens 10 %, und/oder höchstens 10 mm größer ist als der Außendurchmesser des Ankerstabs am Verbindungsabschnitt. Besonders bevorzugt ist der Bohrkronendurchmesser höchstens 8 mm, insbesondere höchstens 6 mm größer als der Ankerstabdurchmesser.

Aufgrund dieser geringen Durchmesserunterschiede zwischen Bohrkrone und Ankerstab entsteht beim Setzen des Ankers ein Bohrloch, dessen Volumen nur geringfügig größer ist als das vom Ankerstab beanspruchte Volumen. Demzufolge ist nur wenig Füllmaterial nötig, um einen Verbund zwischen der Ankerbaugruppe und dem die Ankerbaugruppe umgebenden Untergrund herzustellen. Durch die Minimierung der Bohrlochgröße verringern sich außerdem der Bohraufwand sowie die mechanische Beanspruchung der Ankerbaugruppe, insbesondere hinsichtlich der zu übertragenden Drehmomente, beim Einbringen bzw. Setzen der selbstbohrenden Ankerbaugruppe.

Um die übertragbaren Drehmomente beim Einbringen der selbstbohrenden Ankerbaugruppe generell zu erhöhen, kann bei einer Ankerbaugruppe mit zumindest den Merkmalen aus dem Oberbegriff des Anspruchs 1 eine Hülse vorgesehen sein, die den Ankerstab im Bereich seines Verbindungsabschnitts umschließt, wobei ein Außendurchmesser der Bohrkrone größer ist als ein Außendurchmesser der Hülse. Besonders bevorzugt ist der Außendurchmesser der Bohrkrone jedoch höchstens 6 mm, insbesondere höchstens 3 mm größer als der Außendurchmesser der Hülse.

Vorzugsweise ist die Hülse mit einer Presspassung am Ankerstab befestigt. Zum einen bietet eine solche Presspassung eine fertigungstechnisch einfache Möglichkeit, um die Hülse unverlierbar am Ankerstab zu fixieren, zum anderen ist eine zumindest weitgehend spielfreie Passung zwischen Hülse und Ankerstab notwendig, um durch die Hülse eine Verstärkung der Verbindung zwischen Bohrkrone und Ankerstab zu erreichen. Alternativ kann die Hülse jedoch auch auf jede andere geeignete Art und Weise am Ankerstab befestigt sein.

Gewöhnlich weist die Hülse eine Wandstärke von maximal 2 mm, insbesondere maximal 1 mm auf. Bei einer solch geringen Wandstärke muss durch die Verwendung der Hülse in der Regel keine größere Bohrkrone verwendet werden als für den jeweils verwendeten Ankerstab sowieso nötig. Gleichzeitig reicht diese Wandstärke aus, um die auftretenden Ringzugspannungen in der in Umfangsrichtung geschlossenen Hülse problemlos aufnehmen zu können.

Dies gilt insbesondere für Ausführungsformen, bei denen die Hülse eine Metallhülse, insbesondere eine Stahlhülse ist. Solche Metallhülsen sind einfach herzustellen, preiswert erhältlich und aufgrund ihrer mechanischen Eigenschaften hervorragend für die Verwendung in der vorliegenden Ankerbaugruppe geeignet. Außerdem sind die Metallhülsen den Ankerbaugruppen so klein, dass sie bei einer Tunnel- oder Stollenerweiterung keine Gefahr für die eingesetzten Baumaschinen darstellen.

Um die mechanischen Eigenschaften der Ankerbaugruppe insgesamt weiter zu verbessern, ist der Ankerstab bevorzugt aus einem faserverstärkten Kunststoff, insbesondere einem glasfaserverstärkten Kunststoff hergestellt. Der Ankerstab aus (faserverstärktem) Kunststoff ist verglichen mit Metallankern deutlich leichter und bietet daher Vorteile bei der Verarbeitung. Hinsichtlich der Aufnahmefähigkeit von Ankerzugkräften sind Ankerstäbe aus Metall und faserverstärktem Kunststoff durchaus vergleichbar, wohingegen die Kunststoffanker eine deutlich verringerte Druck- und Scherfestigkeit aufweisen. Dies bietet jedoch Vorteile beim Rückbau der Verankerung, da die Ankerstäbe aus Kunststoff aufgrund ihrer geringen Druck- und Scherfestigkeit beispielsweise von Tunnelbohrmaschinen problemlos rückgebaut bzw. zerstört werden können, ohne die Maschinen selbst zu beschädigen.

Die Bohrkrone oder zumindest deren Bohrabschnitt ist hingegen vorzugsweise aus Metall, insbesondere aus Stahl gefertigt. Aufgrund der beim Bohren auftretenden, hohen mechanischen Beanspruchung weisen Bohrabschnitte bzw. Bohrkronen aus Metall in Bezug auf Verschleiß und Vortrieb doch deutliche Vorteile gegenüber Kunststoffausführungen auf. Außerdem ist die Bohrkrone so klein, dass die Gefahr einer Beschädigung der Baumaschinen beim Erweitern eines bereits verankerten Tunnels oder Stollens äußerst gering ist.

In einer Ausführungsform der Ankerbaugruppe weist der Verbindungsabschnitt des Ankerstabs nach der Ankerstab-Fertigung wenigstens ein im Wesentlichen glattes, konus- oder kreiszylinderförmiges Oberflächensegment auf, und der Verbindungsabschnitt der Bohrkrone weist nach der Bohrkronen-Fertigung ein Schneidgewinde zum Schneiden oder Furchen eines Gewindes in das wenigstens eine Oberflächensegment auf, wobei der Ankerstab nach einer Montage der Bohrkrone im Bereich seines Verbindungsabschnitts ein mit dem Schneidgewinde der Bohrkrone zusammenwirkendes, eingeschnittenes oder eingefurchtes Gewinde zur Übertragung von Drehmomenten und/oder Zugkräften zwischen Ankerstab und Bohrkrone aufweist.

Das Schneidgewinde kann dabei insbesondere als Spitzgewinde ausgeführt sein, da sich eine derartige Gewindegeometrie gut zum Einschneiden oder Einfurchen von Gewinden eignet.

Im Übrigen ist der Ankerstab zumindest im Bereich seines Verbindungsabschnitts vorzugsweise hohl, wobei das Schneidgewinde der Bohrkrone ein Außengewinde und das eingeschnittene oder eingefurchte Gewinde des Ankerstabs ein Innengewinde ist.

Der Verbindungsabschnitt der Bohrkrone kann ein Gewindestab sein, der bis zum Kontakt eines axialen Anschlags der Bohrkrone mit einer Stirnwand des Ankerstabs in diesen eingeschraubt und durch das Schneidgewinde an ihm befestigt ist. Der axiale Anschlag der Bohrkrone wird dabei vorzugsweise durch den Bohrabschnitt der Bohrkrone gebildet. Nach der Herstellung der Ankerbaugruppe ist die Bohrkrone vorzugsweise ausschließlich durch das Zusammenwirken des Schneidgewindes und des eingeschnittenen bzw. eingefurchten Gewindes am Ankerstab befestigt.

Das Schneidgewinde kann dabei einen konstanten Flankenwinkel α von 10° ≤ α ≤ 40°, insbesondere von 20° ≤ α ≤ 30° aufweisen. In diesem Winkelbereich lässt sich einerseits mit recht geringem Aufwand ein Gewinde schneiden bzw. furchen sowie andererseits eine äußerst belastbare Gewindeverbindung in Bezug auf Kraft- und Momentenübertragung herstellen.

Alternativ kann das Schneidgewinde im Bereich seiner Gewindespitze einen ersten Flankenwinkel α₁ und radial daran anschließend einen Flankenwinkel α₂ mit α₂ > α₁ aufweisen. Der Flankenwinkel α₁ liegt vorzugsweise im Bereich 10° ≤ α₁ ≤ 30°, insbesondere bei etwa 20°, und ist damit hervorragend zum Gewindeschneiden bzw. Gewindefurchen geeignet. Der Flankenwinkel α₂ liegt hingegen im Bereich 40° ≤ α₂ ≤ 60°, insbesondere bei etwa 50°, so dass dieser Bereich des Schneidgewindes einen stabilen Abstandshalter zwischen dem Ankerstab und der Bohrkrone bilden kann.

Vorzugsweise greifen nämlich der Ankerstab und die Bohrkrone im Bereich des ersten Flankenwinkels α₁ formschlüssig ineinander und bilden im Bereich des zweiten Flankenwinkels α₂ einen Hohlraum aus. Sofern der Verbindungsabschnitt des Ankerstabs über seine gesamte Oberfläche konus- oder kreiszylinderförmig ausgebildet ist, weist der Hohlraum eine Spiral- bzw. Schraubenform auf.

In der Ausführungsform der Ankerbaugruppe mit einem Hohlraum im Bereich des zweiten Flankenwinkels α₂ weist der Ankerstab im Bereich des Hohlraums vorzugsweise eine Öffnung zum Befüllen des Hohlraums mit einem Klebstoff auf. Durch die Befüllung des insbesondere schraubenförmigen Hohlraums mit Klebstoff wird die Verbindung zwischen Bohrkrone und Ankerstab weiter gestärkt, insbesondere in Bezug auf die Übertragung von Drehmomenten.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figur 1 einen schematischen Längsschnitt durch eine erfindungsgemäße Ankerbaugruppe;
- Figur 2 eine perspektivische Ansicht eines Funktionsteils der erfindungsgemäßen Ankerbaugruppe gemäß einer ersten Ausführungsform;
- Figur 3 eine axiale Draufsicht auf das Funktionsteil gemäß Figur 2;
- Figur 4 eine Seitenansicht des Funktionsteils gemäß Figur 2;
- Figur 5 einen Längsschnitt V-V durch das Funktionsteil gemäß Figur 4 mit zwei Detailausschnitten;
- Figur 6 einen Längsschnitt VI-VI durch das Funktionsteil gemäß Figur 5 in einem auf den Ankerstab aufgeschraubten Zustand;
- Figur 7 eine perspektivische Ansicht eines Funktionsteils der erfindungsgemäßen Ankerbaugruppe gemäß einer zweiten Ausführungsform;
- Figur 8 einen Längsschnitt durch das Funktionsteil gemäß Figur 7 mit zwei Detailausschnitten;
- Figur 9 einen Detailausschnitt der Ankerbaugruppe gemäß der zweiten Ausführungsform im Bereich eines Gewindezahns;
- Figur 10 eine Seitenansicht eines weiteren Funktionsteils der erfindungsgemäßen Ankerbaugruppe; und
- Figur 11 einen schematischen Detailschnitt durch die erfindungsgemäße Ankerbaugruppe im Anschlussbereich zwischen dem Ankerstab und dem Funktionsteil gemäß Figur 10.

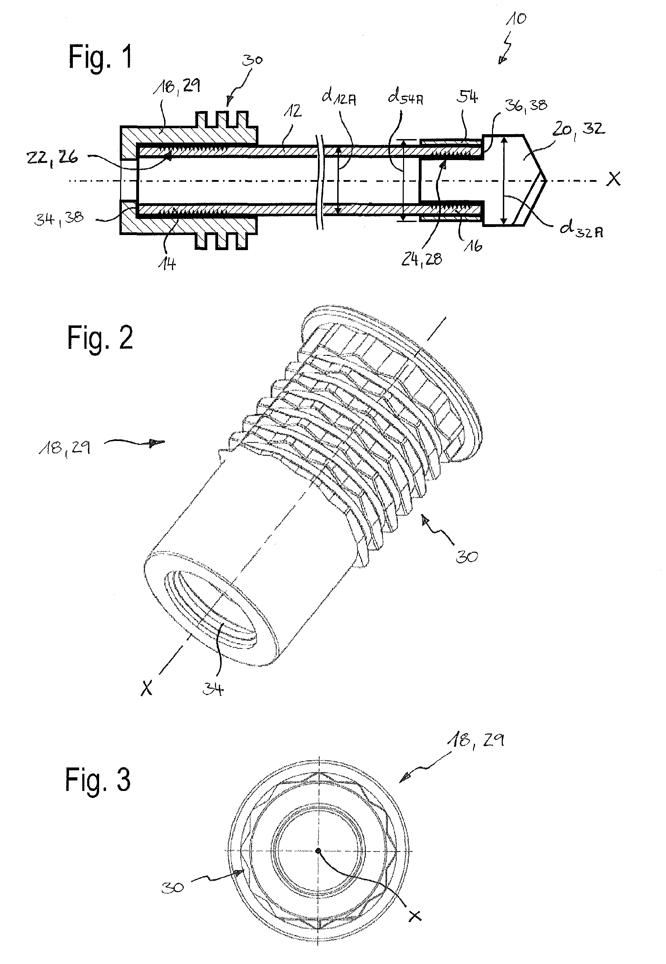

Die Figur 1 zeigt eine Ankerbaugruppe 10, insbesondere für den Berg- und Tunnelbau, umfassend einen Ankerstab 12 aus Kunststoff, der sich längs einer Ankerachse X erstreckt und nach der Ankerstab-Fertigung im Bereich seiner beiden axialen Stabenden jeweils einen Verbindungsabschnitt 14, 16 aufweist, sowie zwei Funktionsteile 18, 20, die sich jeweils längs der Ankerachse X erstrecken und nach der Funktionsteil-Fertigung jeweils ein Schneidgewinde 22, 24 zum Schneiden oder Furchen eines Gewindes 26, 28 im Bereich des Verbindungsabschnitts 14, 16 aufweisen.

Gemäß Figur 1 weist der Ankerstab 12 nach einer Montage der Funktionsteile 18, 20 im Bereich seiner Verbindungsabschnitte 14, 16 jeweils ein mit dem Schneidgewinde 22, 24 der Funktionsteile zusammenwirkendes, eingeschnittenes oder eingefurchtes Gewinde 26, 28 zur Übertragung von Drehmomenten und/oder Zugkräften zwischen dem Ankerstab 12 und den Funktionsteilen 18, 20 auf.

Um im Bereich der Verbindungsabschnitte 14, 16 Gewinde 26, 28 einschneiden oder einfurchen zu können, ist der Ankerstab 12 im Bereich der Verbindungsabschnitte 14, 16 kreiszylinderförmig ausgebildet. In einer alternativen Ausführungsform ist der Ankerstab 12 konusförmig ausgebildet und verjüngt sich zu seinem axialen Ende hin geringfügig. In einer weiteren alternativen Ausführungsform hat der Ankerstab 12 im Bereich seiner Verbindungsabschnitte 14, 16 keinen kreisrunden Querschnitt, sondern weist beispielsweise gegenüberliegende Abflachungen auf. Zum Einschneiden oder Einfurchen der Gewinde 26, 28 und damit zum Verbinden des Ankerstabs 12 mit dem Funktionsteil 18, 20 reicht es prinzipiell aus, wenn der Verbindungsabschnitt 14, 16 wenigstens ein im Wesentlichen glattes, konus- oder kreiszylinderförmiges Oberflächensegment aufweist, wobei unter einem glatten Oberflächensegment insbesondere ein bei der Ankerstab-Fertigung ursprünglich gewindefreies Oberflächensegment zu verstehen ist.

Der Ankerstab 12 aus Kunststoff ist das Kernstück der Ankerbaugruppe 10 und verankert nach deren Endmontage beispielsweise eine Tunnel- oder Stollenwand in einem den Tunnel oder Stollen umgebenden Untergrund oder Gestein. Der Ankerstab 12 wird bei dieser Rückverankerung der Tunnel- oder Stollenwand mitunter erheblichen Zugbelastungen ausgesetzt. Um diese Zugbelastungen problemlos aufnehmen zu können, ist der Ankerstab 12 gemäß Figur 1 aus faserverstärktem, genauer aus glasfaserverstärktem Kunststoff hergestellt. Ein Ankerstab 12 aus faserverstärktem Kunststoff bietet den Vorteil, dass er die hohen Ankerzugkräfte problemlos aufnehmen kann, wohingegen seine Druck- und Scherfestigkeit eher gering ist. Aufgrund dieser geringen Druck- und Scherfestigkeit lässt sich der Ankerstab 12 und damit letztlich die gesamte Ankerbaugruppe 10 bei einer Vergrößerung des Tunnel- bzw. Stollenquerschnitts relativ leicht zerstören, ohne dass die Baumaschinen zur Erweiterung des Tunnels bzw. Stollens beschädigt werden. Verglichen mit Ankerstäben 12 aus Stahl, weist der Ankerstab 12 aus Kunststoff, insbesondere faserverstärktem Kunststoff, außerdem Vorteile bei Materialkosten und Gewicht auf.

Abgesehen vom Ankerstab 12 aus Kunststoff umfasst die Ankerbaugruppe 10 gemäß Figur 1 noch das Funktionsteil 18, welches als Antriebselement 29 mit einer Antriebsgeometrie 30 zum Aufbringen eines Drehmoments auf die Ankerbaugruppe 10 ausgeführt ist, sowie das als Bohrkrone 32 ausgebildete Funktionsteil 20. Die Ankerbaugruppe 10 ist somit eine selbstbohrende Ankerbaugruppe 10.

Konkret ist das Antriebselement 29 eine hülsenförmige Mutter, die bis zu einem axialen Anschlag 34 mit dem Ankerstab 12 verschraubt und durch das Schneidgewinde 22 an ihm befestigt ist. Hingegen ist der Verbindungsabschnitt 16 der Bohrkrone 32 ein Gewindestab, der bis zum Kontakt eines axialen Anschlags 36 der Bohrkrone 32 mit einer Stirnwand 38 des Ankerstabs 12 in diesen eingeschraubt und durch das Schneidgewinde 24 an ihm befestigt ist.

Dementsprechend kann also das Schneidgewinde 22 ein Innengewinde und das eingeschnittene oder eingefurchte Gewinde 26 ein Außengewinde sein, wie dies bei der Verbindung zwischen dem Antriebselement 29 und dem Ankerstab 12 beispielhaft dargestellt ist; oder das Schneidgewinde 24 ist ein Außengewinde und das eingeschnittene oder eingefurchte Gewinde 28 ein Innengewinde, wie dies beispielhaft bei der Verbindung zwischen der Bohrkrone 32 und dem Ankerstab 12 dargestellt ist.

Die Figuren 2 und 3 zeigen eine perspektivische Detailansicht bzw. eine axiale Draufsicht auf eine erste Ausführungsform des als Antriebselement 29 ausgebildeten Funktionsteils 18. Dabei ist die Antriebsgeometrie 30 zum Aufbringen eines Drehmoments auf die Ankerbaugruppe 10 gut zu erkennen. Die Antriebsgeometrie 30 des Antriebselements 29 ist komplementär zur Antriebsgeometrie eines (nicht dargestellten) Werkzeugs, beispielsweise eines Schraubaufsatzes einer Bohrmaschine ausgebildet, sodass das Werkzeug über das Antriebselement 29 den Ankerstab 12 und über den Ankerstab 12 schließlich die Bohrkrone 32 in Umfangsrichtung antreiben kann. Demzufolge muss die Antriebsgeometrie 30 so ausgeführt sein, dass sie möglichst ohne Schlupf ein vom Werkzeug aufgebrachtes Drehmoment auf die Ankerbaugruppe 10 übertragen kann. Im Übrigen ist die Antriebsgeometrie 30 frei wählbar.

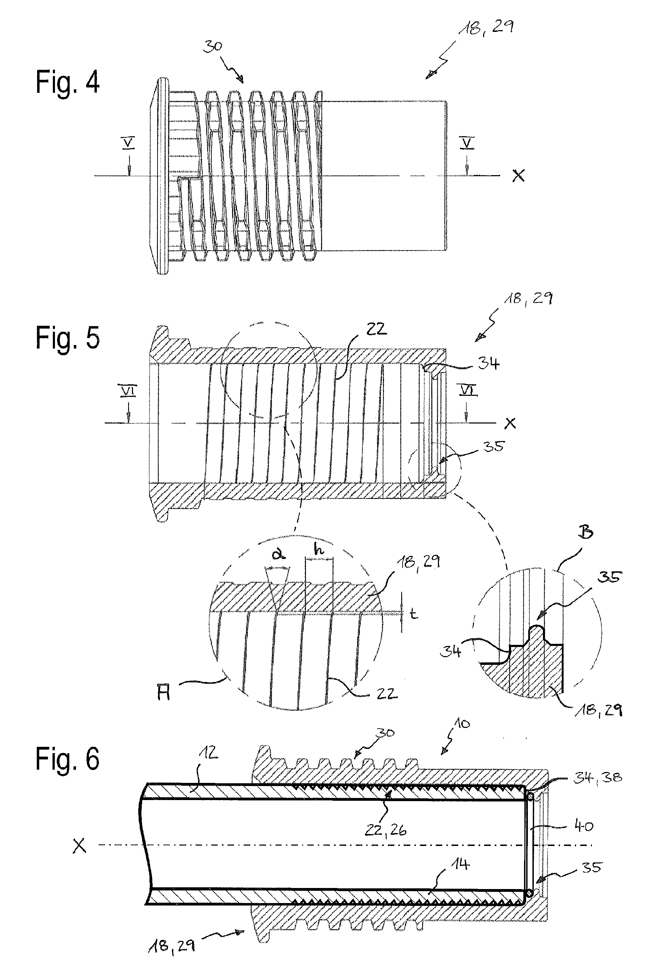

Die Figur 4 zeigt eine Seitenansicht und die Figur 5 einen Schnitt V-V des Funktionsteils 18 gemäß Figur 2.

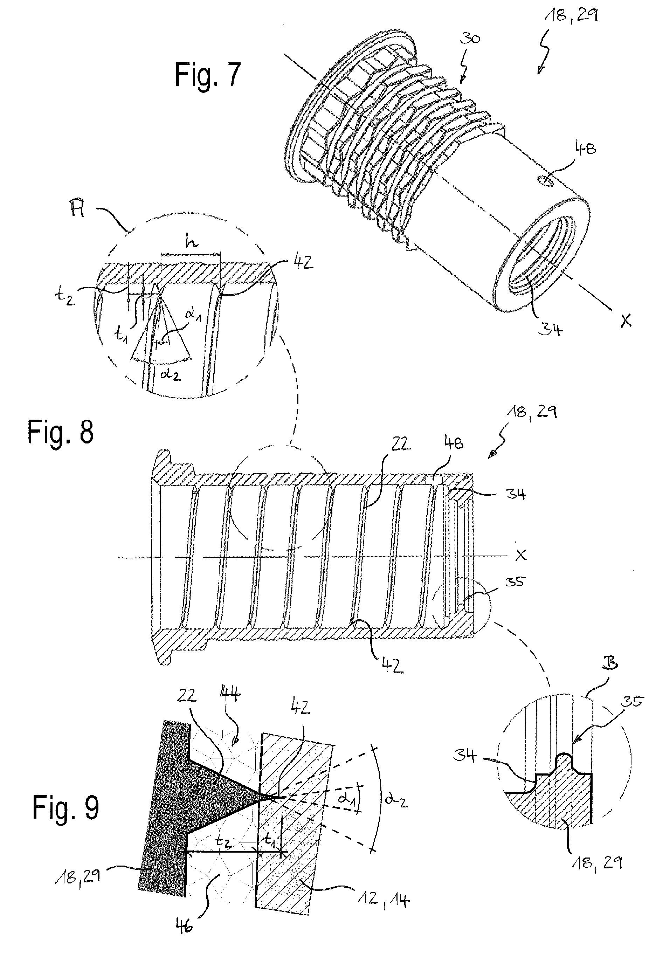

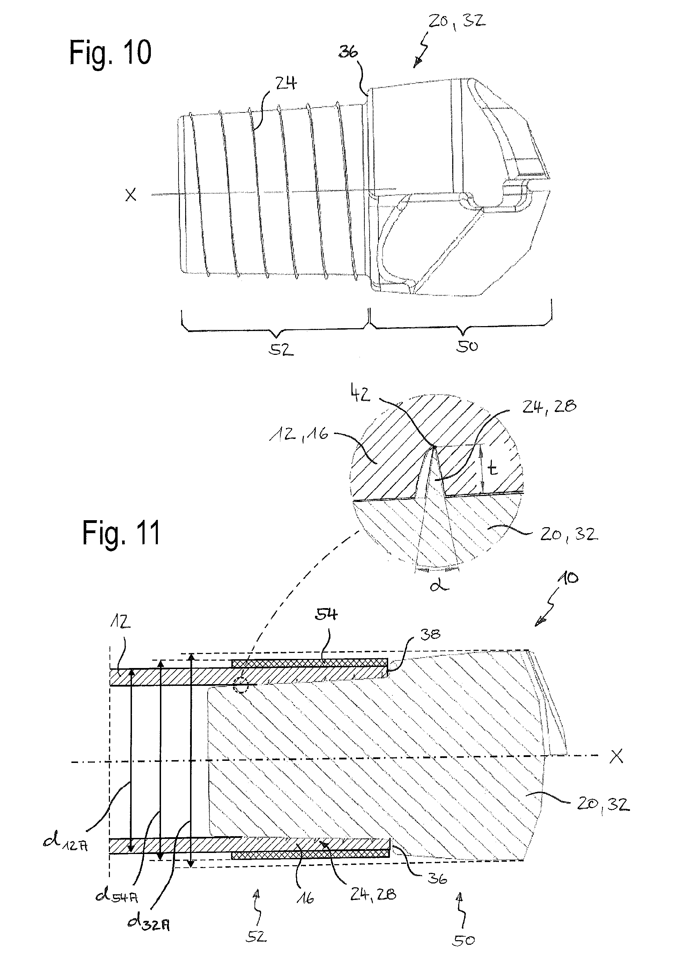

Im Schnitt gemäß Figur 5 wird deutlich, dass das als Antriebselement 29 ausgebildete Funktionsteil 18 das als Innengewinde ausgeführte Schneidgewinde 22 aufweist. Dieses Schneidgewinde 22 ist als Spitzgewinde ausgeführt, um mit geringem Kraftaufwand ein (Außen-)Gewinde in den Verbindungsabschnitt 14 des Ankerstabs 12 schneiden oder furchen zu können. In den Figuren 9 und 11 (siehe Detailausschnitt) sind Beispiele für die Gewindegeometrie eines Spitzgewindes dargestellt.

In einem Gewindedetail A der Figur 5 ist eine Gewindetiefe t, eine Gewindesteigung h sowie ein Flankenwinkel α eingezeichnet. Über die Gewindetiefe t, welche vorzugsweise in der Größenordnung von 0,5 mm bis 1,5 mm, besonders bevorzugt bei etwa 1 mm liegt, und die Gewindesteigung h, welche vorzugsweise in der Größenordnung von etwa 5 mm liegt, können die übertragbaren Kräfte und Momente zwischen dem Funktionsteil 18 und dem Ankerstab 12 festgelegt werden.

In der ersten Ausführungsform des Funktionsteils 18 gemäß den Figuren 2 bis 6 ist der Flankenwinkel α des Schneidgewindes 22 konstant und liegt in einem Bereich von 10° ≤ α ≤ 40°, besonders bevorzugt in einem Bereich von 20° ≤ α ≤ 30°. Bei einem Flankenwinkel α in dieser Größenordnung hat sich herausgestellt, dass sich das Gewinde 26 im Kunststoff-Ankerstab 12 gut einschneiden bzw. einfurchen lässt, insbesondere dann, wenn das Schneidgewinde 22 aus Metall, vorzugsweise aus Stahl hergestellt ist.

Die Figur 5 umfasst ein weiteres Detail B, welches ein axiales Endes des Funktionsteils 18 vergrößert darstellt. In diesem Detail sind der axiale Anschlag 34 sowie eine anschließende Dichtungskontur 35 des Funktionsteils 18 gut zu erkennen.

Die Figur 6 zeigt einen Längsschnitt VI-VI durch das Funktionsteil 18 gemäß Figur 5, wobei das Funktionsteil 18 bereits auf ein axiales Endes, genauer auf den Verbindungsabschnitt 14 des Ankerstabs 12 aufgeschraubt ist. Die Stirnwand 38 des Ankerstabs 12 liegt hierbei am Anschlag 34 des Funktionsteils 18 an, sodass sich das Antriebselement 29 nicht weiter in Montagerichtung auf den Ankerstab 12 aufdrehen lässt. Wird weiterhin ein Drehmoment in Montagerichtung aufgebracht, wie z.B. beim Herstellen des Bohrlochs für die selbstbohrende Ankerbaugruppe 10, so nimmt das Funktionsteil 18 den Ankerstab 12 in Drehrichtung mit.

In Figur 6 ist darüber hinaus auch ein Dichtring 40 zu sehen, der im Bereich der Dichtungskontur 35 axial zwischen dem Funktionsteils 18 und der Stirnwand 38 des Ankerstabs 12 angeordnet ist, um zwischen dem Funktionsteil 18 und dem Ankerstab 12 abzudichten.

Eine solche Abdichtung ist insbesondere in einer zweiten Ausführungsform des Funktionsteils 18 vorteilhaft, die in den Figuren 7 bis 10 dargestellt ist. Da die zweite Ausführungsform des Funktionsteils 18 der ersten Ausführungsform strukturell sehr ähnlich ist, wird diesbezüglich explizit auf die vorangegangene Beschreibung der Figuren 2 bis 6 verwiesen und im Folgenden lediglich auf Unterschiede genauer eingegangen.

Die Figuren 7 und 8 zeigen, analog zu den Figuren 2 und 5, eine perspektivische Ansicht bzw. einen Längsschnitt durch das Funktionsteil 18 gemäß der zweiten Ausführungsform.

Insbesondere anhand des Gewindedetails A der Figur 8 fällt auf, dass das Schneidgewinde 22 im Unterschied zur ersten Ausführungsform im Bereich seiner Gewindespitze 42 einen ersten Flankenwinkel α₁ und radial daran anschließend einen zweiten Flankenwinkel α₂ aufweist, wobei gilt α₂ > α₁. Die Flankenwinkel α₁, α₂ liegen dabei vorzugsweise in den Bereichen 10° ≤ α₁ ≤ 30° und 40° ≤ α₂ ≤ 60°. In einer besonders bevorzugten Ausführungsform beträgt der Flankenwinkel α₁ ≈ 20° und der Flankenwinkel α₂ ≈ 50°.

Wird nun das Funktionsteil 18 auf den Verbindungsabschnitt 14 des Ankerstabs 12 aufgedreht, so greifen der Ankerstab 12 und das Funktionsteil 18 im Bereich des ersten Flankenwinkel α₁ formschlüssig ineinander und bilden im Bereich des zweiten Flankenwinkel α₂ einen Hohlraum 44 aus.

Die Figur 9 zeigt zur Verdeutlichung der Verbindung zwischen dem Ankerstab 12 und dem Funktionsteil 18 gemäß der zweiten Ausführungsform ein stark vergrößertes Detail dieser Verbindung im Bereich eines Gewindezahns.

Die Gewindesteigung h ist üblicherweise etwas größer gewählt als in der ersten Ausführungsform des Funktionsteils 18 und liegt in der Größenordnung von etwa 10 mm. Die Gewindetiefe t des Schneidgewindes 22 setzt sich in der zweiten Ausführungsform des Funktionsteils 18 aus einem Abschnitt t₁ mit dem Flankenwinkel α₁ und einem Abschnitt t₂ mit einem Flankenwinkel α₂ zusammen. In den Verbindungsabschnitt 14 des Ankerstabs 12 schneidet im Wesentlichen nur der Gewindeteil mit dem Flankenwinkel α₁ ein. Der radiale Abschnitt t₁ der Gewindetiefe t ist daher vergleichbar mit der Gewindetiefe t der ersten Ausführungsform und liegt somit ebenfalls in der Größenordnung von 0,5 mm bis 1,5 mm, vorzugsweise bei etwa 0,5 mm. Der radiale Abschnitt t₂ der Gewindetiefe t des Schneidgewindes 22 liegt in der Größenordnung von 1,5 mm bis 2,5 mm und dient im Wesentlichen als Abstandshalter zwischen dem Ankerstab 12 und dem als Gewindemutter ausgebildeten Funktionsteil 18, sodass der Ankerstab 12 und das Funktionsteil 18 nach der Montage konzentrisch ausgerichtet sind.

In Ausführungsformen, bei denen der Verbindungsabschnitt 14 des Ankerstabs 12 eine insgesamt kreiszylinderförmige (oder leicht konische) Oberfläche aufweist, weist der Hohlraum 44 nach der Montage des Funktionsteils 18 am Ankerstab 12 eine Spiral- oder Schraubenform auf.

Dieser Hohlraum 44 wird in der zweiten Ausführungsform des Funktionsteils 18 nach dem Aufschrauben des Funktionsteils 18 auf den Ankerstab 12 mit einem Klebstoff 46 befüllt, um die Haftung zwischen dem Ankerstab 12 und dem Funktionsteil 18 zu erhöhen. Somit können zwischen dem Ankerstab 12 und dem Funktionsteil 18 noch höhere Kräfte und Momente übertragen werden als bei einer reinen Gewindeverbindung.

Um den Klebstoff 46 nach der Montage des Funktionsteils 18 am Ankerstab 12 in den Hohlraum 44 einbringen zu können, weist das Funktionsteil 18 im Bereich des Hohlraums 44 eine Öffnung 48 zum Befüllen des Hohlraums 44 mit Klebstoff 46 auf (vgl. Figuren 7 und 8).

Beim Einpressen des Klebstoffs 46 in den Hohlraum 44 verhindert der Dichtring 40 (vgl. Figur 6), dass der Klebstoff 46 im Bereich des Anschlags 34 an der Stirnwand 38 des Ankerstabs 12 aus dem Hohlraum 44 austritt. Die Öffnung 48 ist gemäß den Figuren 7 und 8 nahe am Anschlag 34 und damit an einem axialen Ende des schraubenförmigen Hohlraums 44 vorgesehen. Der Hohlraum 44 füllt sich beim Einbringen des flüssigen Klebstoffs 46 also schraubenförmig in axialer Richtung, gemäß Figur 8 beispielhaft von rechts nach links. Um die Befüllung mit Klebstoff 46 zu erleichtern, ist es denkbar, dass an dem der Öffnung 48 entgegengesetzten Hohlraumende eine weitere, vorzugsweise kleinere Entlüftungsöffnung vorgesehen ist, durch die das vom Klebstoff 46 verdrängte Luftvolumen entweichen kann.

Die Figur 10 zeigt eine Seitenansicht des als Bohrkrone 32 ausgebildeten Funktionsteils 20. Die Bohrkrone 32 umfasst einen Bohrabschnitt 50 sowie einen Verbindungsabschnitt 52 zum Befestigen der Bohrkrone 32 am Ankerstab 12, genauer am Verbindungsabschnitt 16 des Ankerstabs 12 (vgl. Figuren 1 und 11).

Der Verbindungsabschnitt 52 der Bohrkrone 32 weist nach der Bohrkronen-Fertigung das Schneidgewinde 24 zum Schneiden oder Furchen des Gewindes 28 in den Verbindungsabschnitt 16 des Ankerstabs 12 auf, wobei der Ankerstab 12 nach einer Montage der Bohrkrone 32 im Bereich seines Verbindungsabschnitts 16 ein mit dem Schneidgewinde 24 der Bohrkrone 32 zusammenwirkendes, eingeschnittenes oder eingefurchtes Gewinde 28 zur Übertragung von Drehmomenten und/oder Zugkräften zwischen Ankerstab 12 und Bohrkrone 32 aufweist (Figuren 1 und 11). Der Verbindungsabschnitt 16 des Ankerstabs 12 weist dabei analog zum oben beschriebenen Verbindungsabschnitt 14 nach der Ankerstab-Fertigung wenigstens ein im Wesentlichen glattes, das heißt insbesondere gewindefreies, konus- oder kreiszylinderförmiges Oberflächensegment auf. Im Ausführungsbeispiel gemäß den Figuren 1 und 11 ist sogar der gesamte Verbindungsabschnitt 16 des Ankerstabs 12 kreiszylinderförmig bzw. wie in Figur 11 zu sehen leicht konisch zulaufend ausgebildet.

Im Unterschied zum Funktionsteil 18 mit Innengewinde weist das Funktionsteil 20 ein Außengewinde als Schneidgewinde 24 auf. Der Ankerstab 12 ist zumindest im Bereich seines Verbindungsabschnitts 16 hohl, sodass das als Außengewinde ausgebildete Schneidgewinde 24 der Bohrkrone 32 ein Innengewinde in den Verbindungsabschnitt 16 des Ankerstabs 12 einschneidet oder einfurcht.

Die Figur 11 zeigt ein schematisches Schnittdetail der Ankerbaugruppe 10 im Bereich des als Bohrkrone 32 ausgebildeten Funktionsteils 20. Eine nochmalige Vergrößerung im Bereich des Schneidgewindes 24 der Figur 11 macht deutlich, dass das Schneidgewinde 24 im Wesentlichen dem Schneidgewinde 22 des Funktionsteils 18 in seiner ersten Ausführungsform gemäß den Figuren 2 bis 6 entspricht, sodass bezüglich der Gewindedetails und Gewindeparameter auf die Beschreibung des Schneidgewindes 22 gemäß der ersten Ausführungsform des Funktionsteils 18 verwiesen wird.

Obwohl nicht dargestellt, kann selbstverständlich auch das Schneidgewinde 24 entsprechend dem Schneidgewinde 22 des Funktionsteils 18 in seiner zweiten Ausführungsform ausgebildet sein. Da das Schneidgewinde 24 jedoch ein Außengewinde ist, müsste eine Öffnung zum Befüllen des entstehenden Hohlraums jedoch im Bereich des eingeschnittenen oder eingefurchten Gewindes 28 des Ankerstabs 12 ausgebildet werden.

Falls, wie in Figur 11 dargestellt, zusätzlich eine separate Hülse 54 vorgesehen ist, die den Ankerstab 12 im Bereich seines Verbindungsabschnitts 16 umschließt, müsste die Öffnung zum Befüllen des Hohlraums mit Klebstoff gegebenenfalls auch in der Hülse 54 vorgesehen werden.

Die Figur 11 zeigt die Ankerbaugruppe 10, insbesondere für den Berg- und Tunnelbau, umfassend die Bohrkrone 32 mit ihrem Bohrabschnitt 50 und ihrem Verbindungsabschnitt 52, sowie den Ankerstab 12 aus Kunststoff, der sich längs der Ankerachse X erstreckt und im Bereich eines axialen Stabendes den Verbindungsabschnitt 16 zum Befestigen der Bohrkrone 32 aufweist.

Gemäß Figur 11 ist dabei ein Außendurchmesser d_{32A} der Bohrkrone 32 höchstens 20 %, insbesondere höchstens 10 %, und/oder höchstens 10 mm größer als ein Außendurchmesser d_{12A} des Ankerstabs 12 am Verbindungsabschnitt 16. Besonders bevorzugt beträgt die Differenz der Außendurchmesser d_{32A} und d_{12A} der Bohrkrone 32 und des Ankerstabs 12 (im Bereich seines Verbindungsabschnitts 16) sogar höchstens 8 mm, insbesondere höchstens 6 mm. Aufgrund dieser geringen Differenz entsteht beim Setzen des Ankers ein Bohrloch, das lediglich einen geringfügig größeren Durchmesser aufweist als der Ankerstab 12. Die Bohrung geht aufgrund des geringen Bohrdurchmessers somit schneller, energiesparender und unter geringerer Komponentenbeanspruchung der Ankerbaugruppe 10 vonstatten. Ein weiterer Vorteil dieses kleinen Durchmesserunterschieds ist der geringere Bedarf an Füllmaterial, mit dem der beim Bohren entstehende Ringraum zwischen dem Ankerstab 12 und dem den Ankerstab 12 umgebenden Untergrund verfüllt werden muss.

Die separate Hülse 54 umschließt gemäß Figur 11 den Ankerstab 12 im Bereich seines Verbindungsabschnitts 16, wobei der Außendurchmesser d_{32A} der Bohrkrone 32 größer ist als ein Außendurchmesser d_{54A} der Hülse 54. Die Differenz der Außendurchmesser d_{32A} und d_{54A} der Bohrkrone 32 und der Hülse 54 beträgt vorzugsweise höchstens 6 mm, besonders bevorzugt höchstens 3 mm.

Die Hülse 54 selbst weist eine Wandstärke von maximal 2 mm, insbesondere maximal 1 mm auf. Sie ist mit einer Presspassung am Ankerstab 12 unverlierbar befestigt und somit axial in ihrer Lage fixiert. Infolge der Presspassung sowie der Ausbildung der Hülse 54 als geschlossener Ring verhindert die Hülse 54 eine radiale Aufweitung oder gar ein axiales Einreißen des Ankerstabs 12 beim Eindrehen der Bohrkrone 32. Somit trägt die Hülse 54 zu einer Verstärkung der Verbindung zwischen Bohrkrone 32 und Ankerstab 12 in Bezug auf die aufnehmbaren Kräfte und Momente bei.

Um die in der Hülse 54 auftretenden Ringspannungen problemlos aufnehmen zu können, ist die Hülse 54 in der Regel als Metallhülse, insbesondere als Stahlhülse ausgebildet.

In Bezug auf die Bohrkrone 32 ist zumindest der Bohrabschnitt 50, vorzugsweise jedoch die gesamte Bohrkrone 32 inklusive des Schneidgewindes 24 aus Metall, insbesondere aus Stahl hergestellt.

Gemäß Figur 11 ist der Verbindungsabschnitt 52 der Bohrkrone 32 ein Gewindestab, der bis zum Kontakt eines axialen Anschlags 36 der Bohrkrone 32 mit der Stirnwand 38 des Ankerstabs 12 in den hohlen Ankerstab 12 eingeschraubt und durch das Schneidgewinde 24 an ihm befestigt ist. Der axiale Anschlag 36 der Bohrkrone 32 wird dabei vorzugsweise durch den sowieso vorhandenen, radialen Versatz zwischen dem Verbindungsabschnitt 52 und dem Bohrabschnitt 50 gebildet. Die Bohrkrone 32 ist vorzugsweise ausschließlich durch das Schneidgewinde 24 und das Gewinde 28 am Ankerstab 12 befestigt. Um diese Verbindung zwischen der Bohrkrone 32 und dem Ankerstab 12 zu verstärken, kann optional zusätzlich die Hülse 54 vorgesehen sein. Alternativ oder zusätzlich kann die Verbindung zwischen der Bohrkrone 32 und dem Ankerstab 12 auch dadurch verstärkt werden, dass das Schneidgewinde 24 der Bohrkrone 32 entsprechend dem Schneidgewinde 22 in der zweiten Ausführungsform des Funktionsteils 18 gemäß den Figuren 7 bis 9 ausgebildet und ein entstehender Hohlraum 44 mit Klebstoff 46 gefüllt ist.

Die Ankerbaugruppe 10 gemäß Figur 1 weist folglich zwischen dem Ankerstab 12 und den Funktionsteilen 18, 20 Verbindungen auf, die große Kräfte und Momente aufnehmen können, sodass sich die Ankerbaugruppe 10 hervorragend als selbstbohrende Ankerbaugruppe 10 einsetzen lässt. Darüber hinaus ist die Herstellung der Ankerbaugruppe 10 gemäß dem nachfolgend beschriebenen Verfahren einfach und mit minimalem Ausschussanteil möglich:

In einem ersten Verfahrensschritt wird der Ankerstab 12 gefertigt, der im Bereich wenigstens eines axialen Stabendes den Verbindungsabschnitt 14, 16 mit wenigstens einem, im Wesentlichen glatten, konus- oder kreiszylinderförmigen Oberflächensegment aufweist.

Danach wird das Funktionsteil 18, 20 mit dem Schneidgewinde 22, 24 gefertigt, wobei das Funktionsteil 18, 20 beispielsweise als Antriebselement 29 oder Bohrkrone 32 und das Schneidgewinde 22, 24 als Innengewinde oder Außengewinde ausgebildet sein kann.

In einem weiteren Verfahrensschritt wird schließlich das Funktionsteil 18, 20 auf den Ankerstab 12 aufgedreht, wobei sich das Schneidgewinde 22, 24 des Funktionsteils 18, 20 zur Übertragung von Drehmomenten und/oder Zugkräften zwischen Ankerstab 12 und Funktionsteil 18, 20 in das wenigstens eine konus- oder kreiszylinderförmige Oberflächensegment des Ankerstabs 12 unter Bildung eines eingeschnittenen oder eingefurchten Gewindes 26, 28 einschneidet oder einfurcht.

Das Funktionsteil 18, 20 wird dabei vorzugsweise bis zu einem axialen Anschlag 34, 36 in Montagerichtung auf den Ankerstab 12 aufgedreht. Wird auf das Funktionsteil 18, 20 dann weiter ein Drehmoment in Montagerichtung aufgebracht, so erfolgt eine Drehmomentübertragung auf den Ankerstab 12 bzw. eine zuverlässige Drehmitnahme des Ankerstabs 12, und umgekehrt.

Bei geeigneter Geometrie des Ankerstabs 12 und der Funktionsteile 18, 20 bildet sich beim Aufdrehen des Funktionsteils 18, 20 auf den Ankerstab 12 ein schraubenförmiger oder spiralförmiger Hohlraum 44 zwischen dem Ankerstab 12 und dem Funktionsteil 18, 20 aus, welcher in einem abschließenden Schritt des Herstellungsverfahrens der Ankerbaugruppe 10 mit dem Klebstoff 46 befüllt wird.

In einer speziellen Ausführungsvariante kann vor dem Aufdrehen des Funktionsteils 18, 20 auf den Ankerstab 12 noch eine separate, den Ankerstab 12 im Bereich seines Verbindungsabschnitts 14, 16 umschließende Hülse 54 aufgebracht werden, um die beim Aufdrehen entstehende Gewindeverbindung zwischen dem Funktionsteil 18, 20 und dem Ankerstab 12 zu verstärken.

Zusammenfassend liegen die Vorteile der Ankerbaugruppe 10 gemäß Figur 1 also in einem einfachen Herstellungsverfahren der Ankerbaugruppe 10, einer minimalen Bohrlochgröße der selbstbohrenden Ankerbaugruppe 10 und/oder in robusten Schraubverbindungen innerhalb der Ankerbaugruppe 10, welche hohe Kräfte und Drehmomente aufnehmen bzw. übertragen können.

## Patentansprüche

1. Ankerbaugruppe, insbesondere für den Berg- und Tunnelbau, umfassend
eine Bohrkrone (32) mit einem Bohrabschnitt (50) und einem Verbindungsabschnitt (52), sowie
einen Ankerstab (12) aus Kunststoff, der sich längs einer Ankerachse (X) erstreckt und im Bereich eines axialen Stabendes einen Verbindungsabschnitt (16) zum Befestigen der Bohrkrone (32) aufweist, wobei der Außendurchmesser (d_{32A}) der Bohrkrone (32) größer als der Außendurchmesser (d_{12A}) des Ankerstabs (12) am Verbindungsabschnitt (16) ist,
**dadurch gekennzeichnet, dass** der Außendurchmesser (d_{32A}) der Bohrkrone (32) höchstens 20%, insbesondere höchstens 10%, und/oder höchstens 10mm größer ist als der Außendurchmesser (d_{12A}) des Ankerstabs (12) am Verbindungsabschnitt (16).

2. Ankerbaugruppe nach Anspruch 1, insbesondere nach dem Oberbegriff des Anspruchs 1, **dadurch gekennzeichnet, dass** eine separate Hülse (54) vorgesehen ist, die den Ankerstab (12) im Bereich seines Verbindungsabschnitts (16) umschließt, wobei ein Außendurchmesser (d_{32A}) der Bohrkrone (32) größer ist als ein Außendurchmesser (d_{54A}) der Hülse (54).

3. Ankerbaugruppe nach Anspruch 1 oder 2, **dadurch gekennzeichnet, dass** die Hülse (54) mit einer Presspassung am Ankerstab (12) befestigt ist.

4. Ankerbaugruppe nach einem der vorhergehenden Ansprüche, **dadurch gekennzeichnet, dass** die Hülse (54) eine Wandstärke von maximal 2mm, insbesondere maximal 1mm aufweist.

5. Ankerbaugruppe nach einem der vorhergehenden Ansprüche, **dadurch gekennzeichnet, dass** die Hülse (54) eine Metallhülse, insbesondere eine Stahlhülse ist.

6. Ankerbaugruppe nach einem der vorhergehenden Ansprüche, **dadurch gekennzeichnet, dass** der Ankerstab (12) aus einem faserverstärkten Kunststoff, insbesondere einem glasfaserverstärkten Kunststoff hergestellt ist.

7. Ankerbaugruppe nach einem der vorhergehenden Ansprüche, **dadurch gekennzeichnet, dass** der Bohrabschnitt (50) der Bohrkrone (32), insbesondere die gesamte Bohrkrone (32), aus Metall hergestellt ist.

8. Ankerbaugruppe nach einem der vorhergehenden Ansprüche, **dadurch gekennzeichnet, dass** der Verbindungsabschnitt (16) des Ankerstabs (12) nach der Ankerstab-Fertigung wenigstens ein im Wesentlichen glattes, konus- oder kreiszylinderförmiges Oberflächensegment aufweist und der Verbindungsabschnitt (52) der Bohrkrone (32) ein Schneidgewinde (24) zum Schneiden oder Furchen eines Gewindes (28) in das wenigstens eine Oberflächensegment aufweist, wobei der Ankerstab (12) nach einer Montage der Bohrkrone (32) im Bereich seines Verbindungsabschnitts (16) ein mit dem Schneidgewinde (24) der Bohrkrone (32) zusammenwirkendes, eingeschnittenes oder eingefurchtes Gewinde (28) zur Übertragung von Drehmomenten und/oder Zugkräften zwischen Ankerstab (12) und Bohrkrone (32) aufweist.

9. Ankerbaugruppe nach Anspruch 8, **dadurch gekennzeichnet, dass** das Schneidgewinde (24) als Spitzgewinde ausgeführt ist.

10. Ankerbaugruppe nach Anspruch 8 oder 9, **dadurch gekennzeichnet, dass** der Ankerstab (12) zumindest im Bereich seines Verbindungsabschnitts (16) hohl ist, wobei das Schneidgewinde (24) der Bohrkrone (32) ein Außengewinde und das eingeschnittene oder eingefurchte Gewinde (28) des Ankerstabs (12) ein Innengewinde ist.

11. Ankerbaugruppe nach Anspruch 10, **dadurch gekennzeichnet, dass** der Verbindungsabschnitt (52) der Bohrkrone (32) ein Gewindestab ist, der bis zum Kontakt eines axialen Anschlags (36) der Bohrkrone (32) mit einer Stirnwand (38) des Ankerstabs (12) in diesen eingeschraubt und durch das Schneidgewinde (24) an ihm befestigt ist.

12. Ankerbaugruppe nach einem der Ansprüche 8 bis 11, **dadurch gekennzeichnet, dass** das Schneidgewinde (24) einen konstanten Flankenwinkel α von 10° ≤ α ≤ 40°, insbesondere von 20° ≤ α ≤ 30° aufweist.

13. Ankerbaugruppe nach einem der Ansprüche 8 bis 11, **dadurch gekennzeichnet, dass** das Schneidgewinde (24) im Bereich seiner Gewindespitze (42) einen ersten Flankenwinkel α₁ und radial daran anschließend einen Flankenwinkel α₂ mit α₂ > α₁ aufweist.

14. Ankerbaugruppe nach Anspruch 13, **dadurch gekennzeichnet, dass** der Ankerstab (12) und die Bohrkrone (32) im Bereich des ersten Flankenwinkels α₁ formschlüssig ineinandergreifen und im Bereich des zweiten Flankenwinkels α₂ einen Hohlraum (44) ausbilden.

15. Ankerbaugruppe nach Anspruch 14, **dadurch gekennzeichnet, dass** der Ankerstab (12) im Bereich des Hohlraums (44) eine Öffnung (48) zum Befüllen des Hohlraums (44) mit einem Klebstoff (46) aufweist.
